# EUROPEAN PATENT APPLICATION

(11) **EP 1 842 430 A1**
(43) Date of publication of application: **10.10.2007**
(21) Application number: 07007038.8
(22) Date of filing: 04.04.2007
(51) Int. Cl.: A23F 5/24

(54) **Coffee extracting method for preventing flavor loss and coffee ice cube obtained thereby**

(30) Priority: 07.04.2006 CN 200610072672
(71) Applicant: Cheng, Tien Po, Keelung 200 (TW)
(72) Inventor: Cheng, Tien Po, Keelung 200 (TW)
(74) Representative: LOUIS, PÖHLAU, LOHRENTZ

(57) **Abstract**

A coffee extracting method and ice cube for preventing flavor loss are provided. The method comprises the steps of extracting a concentrated coffee extract from the coffee powder by a coffee extracting machine, and then, placing the concentrated coffee extract in a low temperature environment so that the concentrated coffee extract solidifies as a result of cooling down rapidly, wherein the solid extract can be a coffee concentrate ice cube, such that the flavor of the concentrated coffee extract can be extended, and the flavor loss can be prevented when the concentrated coffee extract is stored for a predetermined period.

## Description

### FIELD OF THE INVENTION

The present invention relates to a coffee extracting method and coffee ice cube, and more particularly to a coffee extracting method and coffee ice cube with preventing flavor losing, which is processed by refrigerating the concentrated coffee extract, such that the flavor thereof can be extended.

### BACKGROUND OF THE INVENTION

Since the coffee had found from human for being made as a drink, the unique flavor and invigorating effect of coffee attract most of people in the world; apparently, there are a lot of coffee shops on the street, as well as, various coffee drinks or instant coffee are presented on the supermarket.

As the conventional coffee market, the flavor, convenience, and price of coffee cannot be provided at the same time, thus, the quality of coffee brewed from general coffee shop is better than the coffee drinks presented on the supermarket, according to the comment of a coffee lover. That is, the quality of coffee bean and roasting at coffee shops is much better than general coffee drinks; furthermore, the volatile compounds within the general coffee drinks will easily emit during the storage period thereof.

However, the price of coffee cannot be afforded everyday for most people at coffee shop, consequently, the reason for higher price of coffee at coffee shops is that has to consider the rent, the cost of coffee beans, the demanded of experienced barista, and a good quality coffee extracting machine.

The cost of a concentrated coffee extracting machine, a coffee grinder, and relative apparatuses is around numerous hundred thousands N.T. dollars that is usually the main cost for a coffee shop on the primary opening. Since a good quality concentrated coffee extracting machine is operated by an experienced barista, the salary for hiring an experienced barista is much higher than the general student assistants. Therefore, the above mentioned additional costs are shared equally among consumers, such that will cause the higher price of coffee at coffee shops.

Accordingly, hiring an experienced barista would increase the cost for the coffee shops; however, educating an experienced barista would spend more time and money, which is an additional expense for coffee shops, thus, multiple coffee shops usually hire insufficient experienced student assistants for operating the coffee extracting machine that results to extract the coffee extract under improper conditions, such that the quality of coffee will be affected. Due to the consumers, the spending for such coffee is unfair.

### SUMMARY OF THE INVENTION

Accordingly, a novel coffee extracting method and product thereof are the key points of the present invention, which are not only used to prevent the flavor losing and benefit for extending the flavor-keeping period, also improve the efficiency of coffee brewing and reduce the cost.

It is a primary object of the present invention to provide a coffee extracting method with preventing flavor losing that is to place the concentrated coffee extract under a low temperature environment for preventing flavor losing.

It is a secondary object of the present invention to provide a coffee extracting method with preventing flavor losing, wherein the concentrated coffee extract is refrigerated as a concentrated coffee ice cube that can improve the coffee quality and the convenience for brewing.

It is another object of the present invention to provide a coffee extracting method with preventing flavor losing that can make and store a lot of concentrated coffee ice cubes within a short time for reducing the coffee extracting cost efficiently.

It is another object of the present invention to provide a coffee ice cube with preventing flavor losing that can be used by coffee shops without expensing much apparatuses, therefore, the expense of coffee shops can be reduced surely.

It is another object of the present invention to provide a coffee ice cube with preventing flavor losing, wherein the coffee reduced and made method is easier than the prior art, such that can improve the efficiency of coffee making.

It is another object of the present invention to provide a coffee ice cube with preventing flavor losing that can be made by the steps of cooling down the concentrated coffee extract, sub-packaging proper concentrated coffee extract, refrigerating the concentrated coffee extract to be as the concentrated coffee ice cubes, such that can improve the convenience for further using.

To achieve the previous mentioned objects, the present invention provides a coffee extracting method with preventing flavor losing, comprising the steps of extracting coffee powder by hot water to result as a concentrated coffee extract; and placing the concentrated coffee extract under a low temperature environment, wherein the low temperature environment can be set under zero degree centigrade below to result the concentrated coffee extract being refrigerated as a solid state that can be as a concentrated coffee ice cube.

To achieve the previous mentioned objects, the present invention further provides a coffee ice cube with preventing flavor losing, comprising an espresso extract placed under a low temperature environment, wherein the low temperature environment can be set under zero degree centigrade below to result the concentrated coffee extract being refrigerated as solid state, which is a concentrated coffee ice cube, wherein the solid sate can be selected from a cube, an oblong, a cylinder, a polygon and a combination thereof.

### BRIEF DESCRIPTION OF THE DRAWINGS

It will be understood that the figures are not to scale since the individual layers are too thin and the thickness differences of various layers too great to permit depiction to scale.
Fig. 1 is a making method flow chart of a preferred embodiment of the present invention;
Fig. 1A is a structure three-dimensional view of a preferred embodiment of the present invention; and
Fig. 2 is structure view of a preferred embodiment of the cooling tank as the present invention mentioned.

### DETAILED DESCRIPTION OF THE INVENTION

The structural features and the effects to be achieved may further be understood and appreciated by reference to the presently preferred embodiments together with the detailed description.

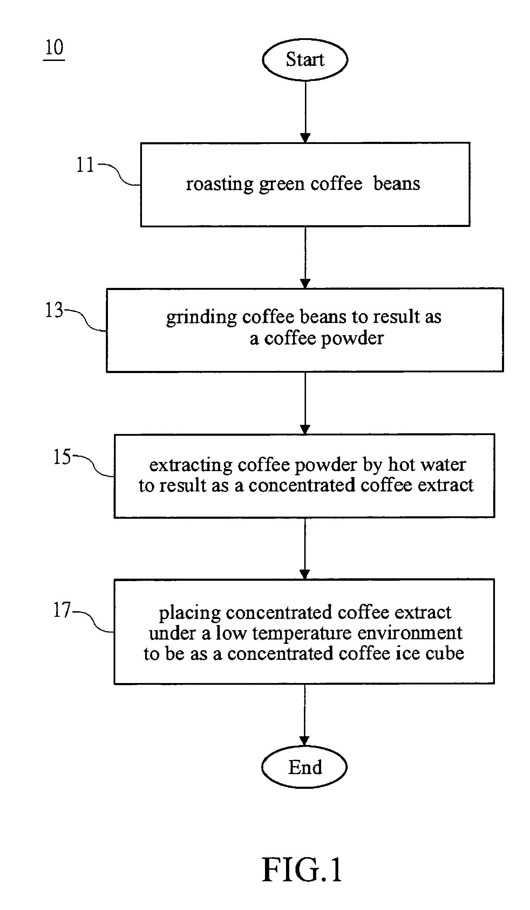

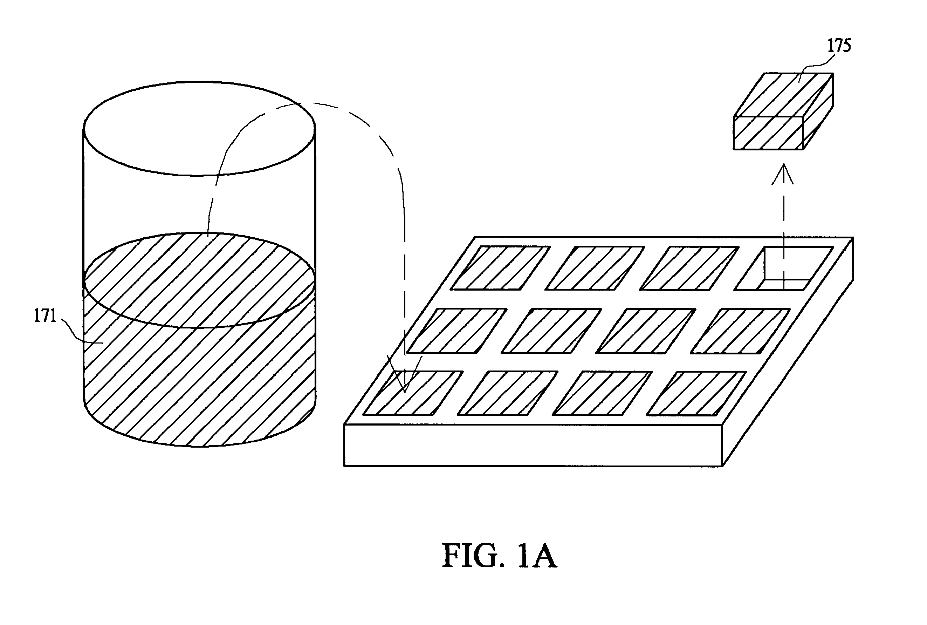

At first, referring to Fig. 1, is a making method flow chart of a preferred embodiment of the present invention. The coffee extracting method with preventing flavor losing comprises the step of placing the concentrated coffee extract under a low temperature environment to result the concentrated coffee extract refrigerating as a solid state, which can be as the concentrated coffee ice cube. Accordingly, the flavor of the concentrated coffee extract can be extended according to the concentrated coffee ice cube.

As the general coffee extracting procedure, firstly, the green coffee beans have to be roasted to result as the coffee beans (roasted beans) presented on the market generally, as shown on step 11. That is the primary step for extracting coffee extract; of course, the flavor of coffee roasted beans can be adjusted from alternating the time, power, and number of times during roasting that can be regard as the demand from roaster with further control and adjustment.

Practically, various coffee beans with different flavors and places of origin can be mixed to be as distinctive flavor coffee beans, such as the espresso coffee beans. Surly, according to the beans mixing, various green coffee beans can be mixed at first; otherwise, the coffee roasted beans with different roasting can be mixed in proper proportion also, accordingly, enriching the coffee flavor is proposed.

During the coffee extracting procedure, the quality of green coffee beans and coffee roasting will affect the quality of coffee extract thereafter. In another word, once the quality of green coffee beans and coffee roasting are improper, a nice coffee extract would not be came out.

Furthermore, the coffee roasted beans have to be grinding to result as the coffee powder, as shown on step 13. The coffee extract is made by soaking the coffee beans in boiling water to extract the water-soluble compounds of the coffee beans, that is, grinding the coffee beans by a coffee grinder to result as the coffee powder, soaking the coffee powder in hot water at proper temperature for increasing the touching area of the coffee powder and the water that is advantage for extracting the water-soluble compounds within the coffee beans.

According to the general coffee extracting machine, such as the filter type pot, the drip coffee pot, the siphon type pot, the Mocha pot, or espresso coffee extracting machine, the touching area with water for every coffee powder is the same during the same step of extracting coffee extract. In the meantime, if the size difference of every coffee powder is too large, then the coffee powder extracting will be affected under soaking in the same period, such that the quality of coffee extract will be unqualified. Therefore, improving the even of the coffee powder is very important after grinding, thus, most of coffee shops spend a lot of money to purchase the coffee grinder for adjusting the thickness of coffee powder and improving the even thereof.

After grinding, the coffee powder is extracted to be the coffee extract by hot water. In accordance with the present invention, the coffee extract is the concentrated coffee extract for raising the usage field of the coffee extract, as shown on step 15.

The concentrated coffee extracting procedure comprises various types, such as soaking the coffee powder in boiling water at long time for raising the concentration of coffee extract, of course, the concentrated coffee extract can be as the espresso coffee made by the espresso coffee extracting machine. Comparing with both of above mentioned methods for extracting concentrated coffee extract, the flavor of the espresso coffee made by the espresso coffee extracting machine is better than another. That is, the coffee powder soaking in boiling water is too long to over extract, in other word, the unsavory compounds of coffee powder is extracted also, however, the espresso coffee extracting machine is operated with high pressure steam that works to result the hot water passing through the finer powder rapidly, such that can further sieves from the extracted compounds of powder, thus, the flavor and taste of concentrated coffee extract can be obtained. Comparatively, the expense of spending the espresso coffee extracting machine and operators are more than another.

Thereafter, the concentrated coffee extract can be placed under a low temperature environment, such as zero degree centigrade below, such that the concentrated coffee extract is refrigerated as a solid state, which can be the concentrated coffee ice cube, as shown on step 17 and Fig. 1A. Accordingly, the key point of the present invention is the procedure of refrigerating the concentrated coffee extract 171 to be as a concentrated coffee ice cube 175, as shown on the step 15.

Furthermore, the size of concentrated coffee ice cube 175 can be adjusted during the refrigerating the concentrated coffee extract 171, as shown on Fig. 1A, that is, sub-packaging proper concentrated coffee extract 171 and refrigerating to result the concentrated coffee extract refrigerated as the solid states that are the same type and size, such as a cube, an oblong, a cylinder, a polygon and other types, thus, the further usage of the concentrated coffee ice cube 175 can be more convenient. For example, if a cup of 150cc café Americano is made by 30cc concentrated coffee extract 171, the concentrated coffee extract 171 can be sub-packaged at first, and then, the concentrated coffee extract 171 is refrigerated to be as concentrated coffee ice cubes 175 with the same size, therefore, consumers can easily reduce the concentrated coffee ice cube to be a cup of café Americano.

During the coffee extracting procedure, according to the step of solving the water-soluble compounds of the coffee powder by boiling water, and filtering the coffee powder, a coffee extract can be made; however, there are proportional volatile compounds within the coffee extract that will lose as time going by, as well as, the flavor of the coffee extract will be affected also. For example, when the concentrated coffee extract is under the room temperature environment, the volatile compounds within the coffee extract will emit constantly, thereafter, the volatile compounds will vanish totally after one hour late that is one of the unsavory reasons for the coffee extract presented on the market, as well as, the reason causes the coffee extract cannot be made with a great quantity and stored for a long time.

Generally, due to the volatile compounds, the volatility speed is as direct proportion with the exponent of the temperature wherein, in another word, as the temperature is higher, the volatility speed will raise also, on the contrary, as the temperature is lower, the volatility speed will reduce accordingly. Therefore, this physical feature is applied in the present invention, that is, the concentrated coffee extract is refrigerated to be a concentrated coffee ice cube through rapid cooling; such that the emission of the volatile compounds can be reduced efficiently. Furthermore, in accordance with the temperature is lower, the emission of volatile compounds is slow, consequently, as the concentrated coffee extract is refrigerated, the activity of the molecule therein will be slowed, such that the flavor of concentrated coffee extract can be extended. Additionally, the concentrated coffee ice cube can be more convenient for usage thereafter.

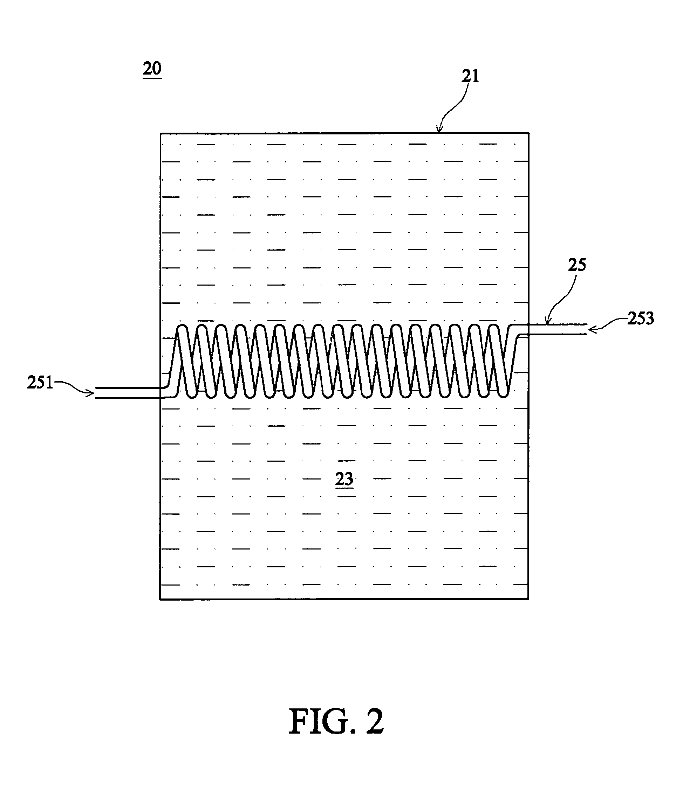

After the concentrated coffee extract is made, the temperature thereof is between fifty degree to seventy degree centigrade, wherein the volatile compounds within the concentrated coffee extract will emit rapidly under this temperature range, such that various cooling devices can be used for cooling down the concentrated coffee extract rapidly, thus, the flavor of the concentrated coffee extract can be held. For example, a cooling tank 20 can be as the cooling device that is used to fill the concentrated coffee extract for cooling down the concentrated coffee extract rapidly, as shown on Fig. 2. The cooling tank 20 comprises a tank base 21 and a low temperature fluid 23 filled with the tank base 21, wherein the low temperature fluid 23 can be as the liquid or the air. And, at least one circular pipe 25 is placed within the internal of the low temperature fluid 23, wherein the circular pipe 25 is made by a material with higher thermal conductivity that can be useful for the heat conducting. Consequently, the concentrated coffee extract 171 can be infused into the circular pipe 25 from the inlet 251 and circuited around path according to the circular pipe 25, and then, flowed out from the outlet 253 of the circular pipe 25, thus, a low temperature concentrated coffee extract 171 can be generated, after that, the low temperature concentrated coffee extract 171 will be refrigerated to result as the concentrated coffee ice cube 175, wherein the temperature of concentrated coffee extract flowed out from the circular pipe 25 can be adjusted according to the length of circular pipe 25 and the temperature of the low temperature fluid 23.

Since the above mentioned benefits, the flavor keeping period is extended for the concentrated coffee extract, such that the concentrated coffee extract brewing is more convenient and easier, furthermore, there are without any apparatuses applied, such as the coffee grinder or the coffee extracting machine. For example, the concentrated coffee ice cube can be reduced into the concentrated coffee extract or the espresso coffee through a heating process, as well as, the concentrated coffee ice cube can be drenched with boiling water to become as the café Americano sold on the general coffee shops, surely, as having proper milk, a café latte or Cappuccino can be made also.

The cost down and quality improvement are the most advantages of the present invention; obviously, a coffee extracting machine and a coffee grinder are required that cost a lot of money, by the way, there is a experienced barista for operating that, however, the number of experienced baristas are too few to satisfy for most coffee shops. Therefore, according to the feature of the present invention, the coffee extracting procedure can be finished at first, that is, the coffee roasting, grinding, and refrigerating as the concentrated coffee ice cubes from the coffee powder can be processed at the same place, and then, the concentrated coffee ice cubes can be sold to multiple coffee shops and general consumers, accordingly, the mass production of the concentrated coffee extract and store for that can be reduced the cost substantially, such that the expense of apparatuses and experienced baristas hiring can be increased relatively, which will efficiently improve the quality of concentrated coffee extract.

Certainly, the flavor of the concentrated coffee ice cube will lose as time going by; however, since the expense of concentrated coffee extracting machines and experienced baristas are more than others, the prime quality of the concentrated coffee extract is much better than the general coffee shops. Even the quality of concentrated coffee ice cube will be affected as time going by, the quality of concentrated coffee extract is still better than general coffee shops in predetermined storing period; surely, it is without mentioning for comparing with the general coffee drinks presented on the markets. Additionally, the concentrated coffee extract disclosed on the present invention is more convenient for usage and cheaper than general multiples coffee shops.

While this invention has been described with reference to illustrative embodiments, this description is not intended to be construed in a limiting sense. Various modifications of the illustrative embodiments, as well as other embodiments of the invention, which are apparent to persons skilled in the art to which the invention pertains are deemed to lie within the spirit and scope of the invention.

## Claims

1. A coffee extracting method with preventing flavor losing, comprising the steps of: extracting coffee powder by hot water to result as a concentrated coffee extract(171); and further charactericed by placing said concentrated coffee extract (171) under a low temperature environment, wherein said low temperature environment can be set under zero degree centigrade below to result said concentrated coffee extract (171) being refrigerated as a solid state that can be as a concentrated coffee ice cube (175).

2. The coffee extracting method of claim 1, wherein said concentrated coffee extract (171) is extracted from an espresso coffee extracting machine, and said concentrated coffee extract (171) is an espresso coffee.

3. The coffee extracting method of claim 1, further comprising a step of: grinding coffee beans by a coffee grinder to result said coffee beans being as said coffee powder.

4. The coffee extracting method of claim 1, further comprising a step of: cooling down said concentrated coffee extract (171) by a cooling device to result as a low temperature concentrated coffee extract (171).

5. The coffee extracting method of claim 1, wherein said concentrated coffee ice cube (175) can be reduced to said concentrated coffee extract (171) by heating.

6. The coffee extracting method of claim 1, wherein said concentrated coffee ice cube (175) can be made as a café Americano by boiling water.

7. The coffee extracting method of claim 1, wherein the size of said concentrated coffee ice cube (175) can be adjusted.

8. A coffee ice cube with preventing flavor losing, comprising a concentrated coffee extract (171) placed under a low temperature environment, and the **characterized by** the low temperature environment can be set under zero degree centigrade below to result said concentrated coffee extract (171) being refrigerated as solid state, which is a concentrated coffee ice cube (175), wherein said solid sate can be selected from a cube, an oblong, a cylinder, a polygon and a combination thereof.

9. The coffee ice cube of claim 8, wherein said concentrated coffee extract (171) is an espresso coffee.

10. The coffee ice cube of claim 8, wherein the size of said concentrated coffee ice cube (175) can be adjusted.
